# EUROPEAN PATENT APPLICATION

(11) **EP 1 530 372 A1**
(43) Date of publication of application: **11.05.2005**
(21) Application number: 04026363.4
(22) Date of filing: 05.11.2004
(51) Int. Cl.: H04N 7/16, H04N 7/173, H04N 5/765

(54) **Information providing apparatus, information providing method, and information record medium therefor**

(30) Priority: 07.11.2003 JP 2003378400
(71) Applicant: Pioneer Corporation, Meguro-ku, Tokyo (JP)
(72) Inventor: Kawaguchi, Tomoyuki, Tsurugashima-shi Saitama-ken (JP); Hosoi, Masayuki, Tsurugashima-shi Saitama-ken (JP)
(74) Representative: Skuhra, Udo, Dipl.-Ing.

(57) **Abstract**

An information providing apparatus includes a hard disk drive (35) and an optical disk (39) capable of storing contents data and local meta data indicating the attribute of the contents data, an input unit (49) which selects plural pieces of contents data, a network interface (50) which obtains reference data in the selected contents data, and a CPU (46) which performs at least one of play-back control of the contents data and provision of evaluation information in the contents data based on presence/absence of record of contents data, the reference data, and the attribute data in the hard disk drive (35) and optical disk (39).

## Description

### BACKGROUND OF THE INVENTION

### 1. Field of the Invention

The present invention relates to an information providing apparatus, an information providing method, and an information record medium for providing contents data recorded using management data for management of at least one of the play-back and the record of the contents data provided by a provider of contents data.

### 2. Description of the Related Art

Recently, a hard disk recorder which records broadcast contents, etc. onaharddiskhasbecomecommercialandwidespread. The hard disk recorder has the function of recording broadcast contents as it is, and providing the contents for user's view with a user-requested timing. Since the hard disk recorder uses a hard disk as a record medium, it is easily accessed at random as compared with a magnetic tape, and enables to play-back only a part of the broadcast contents to be appropriately selected by the editing operation.

On the other hand, a digital broadcast system is operated by transmitting a digitized television signal through a satellite such as a broadcast satellite, a communications satellite, etc., and receiving the signal in each user home, thereby providing a television program to a viewer. Since a number of broadcast channels can be reserved in this type of system, a large number of programs can be broadcast.

In the above-mentioned system, the data (hereinafter referred to as meta data) describing program information indicating the broadcast contents of a number of programs, for example, predetermined information about broadcast contents such as program arrangement information (hereinafter referred to as SI (service information)), etc. in a BS (broadcasting satellite) digital broadcast and a CS (communication satellite) digital broadcast is transmitted from a satellite to a television broadcast receiver in each user home together with video-audio information (hereinafter referred to as video-audio data) of a TV program.

Each television broadcast receiver which receives broadcast contents data transmitted by the above-mentioned system outputs video-audio data to a TV display, extracts meta data, and provides various services to a user using the meta data.

Conventionally, a contents data providing apparatus such as a broadcast reception-record apparatus, etc. which provides contents data using meta data indicating an attribute of contents data and management information can be disclosed by, for example, Japanese Patent Laid-Open No. 2003-18529. The disclosure of the corresponding US2003012549A1 is hereby incorporated by reference in its entirety.

The contents data providing apparatus disclosed by the above patent document registers editing information corresponding to an editing operation as meta data when broadcast contents data received at a user instruction is edited, in a database provided in a server through a network in addition to attribute data indicating an attribute of contents data of a broadcast program such as SI information.

On the other hand, the contents data providing apparatus receives meta data having editing information registered by another user from the server through a network, and based on the received meta data, plays-back corresponding contents data received and recorded in advance, and broadcast contents can be provided based on the meta data registered by another user.

An advertisement image is added to the meta data transmitted from a video database of the server.

### SUMMARY OF THE INVENTION

However, since the meta data is commonly distributed over a network in the above-mentioned conventional contents data providing apparatus, the meta data cannot hold each user's individual information such as prescribing user's individual editing operation, therefor contents data cannot be provided using user-specific information.

In the conventional apparatus, since meta data prescribes only the play-back region and the play-back order of the contents data, only the contents and play-back method of the contents data can be known based on the meta data, and other items relating to the contents data such as the evaluation of the contents data cannot be known.

The present invention has been developed with the above-mentioned situation taken into account. An example of the object of the present invention is to provide an information providing apparatus, an information providing method, and a record medium capable of informing a user of not only the contents and play-back method of contents data, but also a user opinion, evaluation, and attention level for contents data.

The invention according to claim 1 relates to an information providing apparatus which provides recorded contents data using reference data having at least one of evaluation information about evaluation of contents data and management information for management of play-back and record of the contents data, comprising:
a recording device which can record the contents data and attribute data indicating an attribute of the contents data;
a selection device which selects plural pieces of the contents data;
an acquisition device which obtains the reference data in the selected contents data; and
a play-back/providing device which performs at least one of play-back control of the contents data or provision of evaluation information in the contents data based on presence/absence of record of contents data, the reference data, and the attribute data in the recording device.

The invention according to claim 5 relates to an information providing method which provides recorded contents data using reference data having at least one of evaluation information about evaluation of contents data and management information for management of play-back and record of the contents data, comprising:
a recording process which can record the contents data and attribute data indicating an attribute of the contents data;
a selection process which selects plural pieces of contents data;
an acquisition process which obtains the reference data in the selected contents data; and
a play-back/providing process which performs at least one of play-back control of the contents data andproviding evaluation information in the contents data based on presence/absence of record of contents data, the reference data, and the attribute data in the recording process.

The invention according to claim 6 relates to an computer-recordable information record medium on which a program is recorded, wherein said program provides recorded contents data using reference data having at least one of evaluation information about evaluation of contents data and management information formanagement of play-back and record of the contents data, wherein said program makes a computer function as:
a recording device which can record the contents data and attribute data indicating an attribute of the contents data;
a selection device which selects plural pieces of contents data;
an acquisition device which obtains the reference data in the selected contents data; and
a play-back/providing device which performs at least one of play-back control of the contents data and providing evaluation information in the contents data based on presence/absence of record of contents data, the reference data, and the attribute data in the recording device.

### BRIEF DESCRIPTION OF THE DRAWINGS

FIG. 1 is a block diagram showing an example of the schematic configuration of the information providing apparatus according to an embodiment of the present invention;
FIG. 2 is a block diagram of the configuration of the server shown in FIG. 1;
FIG. 3 is a block diagram of the configuration of the broadcast reception-record apparatus shown in FIG. 1;
FIG. 4 is an explanatory view showing an example of broadcast contents;
FIG. 5A is an explanatory view showing a schematic configuration of the meta data of broadcast contents;
FIG. 5B is an explanatory view showing a schematic configuration of the meta data of broadcast contents;
FIG. 6 is an explanatory view showing the detail of the meta data shown in FIG. 5A;
FIG. 7 is an explanatory view showing the detail of the meta data shown in FIG. 5B;
FIG. 8 is a flowchart showing the registering process of the meta data of a server;
FIG. 9 is a flowchart showing a meta data obtaining process of the broadcast reception-record apparatus; and
FIG. 10 is a flowchart showing a meta data obtaining process of the broadcast reception-record apparatus.

### DETAILED DESCRIPTION OF THE PREFERRED EMBODIMENTS

The preferred embodiments for performing the present invention are explained by referring to the attached drawings.

In the embodiments explained below, a plurality of broadcast reception-record apparatuses receive broadcast contents, and record the contents data in the built-in hard disk or optical disk.

The broadcast reception-record apparatus records received broadcast contents data (hereinafter referred to simply as contents data) in a built-in hard disk (HD) or an optical disk, records the contents data, regenerates the recorded contents data, or provides information about contents data, based on meta data describing predetermined information about the contents data such as an attribute of contents data.

The broadcast reception-record apparatus generates data (hereinafter referred to as local meta data) individually used by each user inmeta data, and obtains reference data (hereinafter referred to as public meta data) which is meta data other than the local meta data over a network from a server. The broadcast reception-record apparatus records the above-mentioned local meta data and the above-mentioned public meta data on the built-in hard disk or optical disk.

Especially, according to the present embodiment, the broadcast reception-record apparatus receives public meta data over a network, plays-back and records contents data with a combination of the public meta data and the local meta data read from the built-in hard disk or optical disk, or provides the information about the contents data.

Thebroadcastreception-recordapparatus records localmeta data on a built-in hard disk of optical disk, and reads it from the built-in hard disk or optical disk when the public meta data is used. In the following embodiment, however, local meta data is recorded on a built-in hard disk, and is read from the built-in hard disk when public meta data is used.

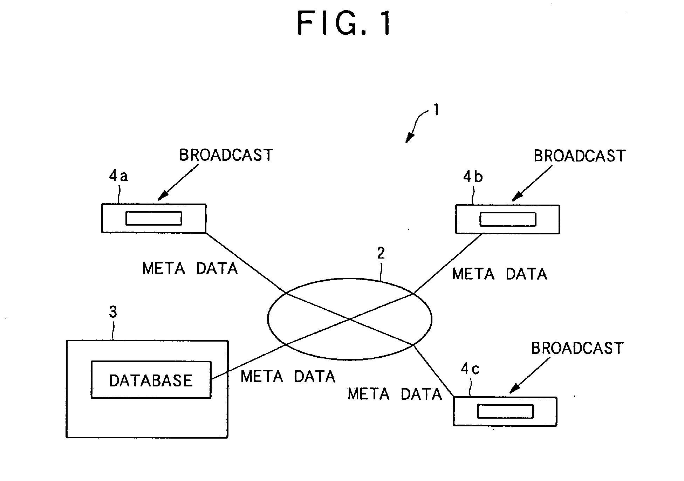

First, the entire configurations of the broadcast reception-record apparatus according to the present embodiment and the information providing system comprising a server which provides public meta data are explained below by referring to FIG. 1.

FIG. 1 is a block diagram showing an example of the schematic configuration of the contents providing system according to the present embodiment.

As shown in FIG. 1, an information providing system 1 according to the present embodiment comprises a server 3 which provides public meta data relating to contents data, and a plurality of broadcast reception-record apparatuses 4a to 4c which receive the contents data and public meta data, and provide contents data based on contents data or public meta data. The server 3 and the plurality of broadcast reception-record apparatuses 4a to 4c are connected over a network 2 such as Internet, etc.

The information providing system 1 according to the present embodiment comprises one server 3, and three broadcast reception-record apparatuses 4a to 4c, but the number of them can be arbitrarily determined.

The server 3 provides public meta data in any contents data to each of the broadcast reception-record apparatuses 4a to 4c, and receives public meta data transmitted from the broadcast reception-record apparatuses 4a to 4c. That is, the public meta data is transmitted and received between the broadcast reception-record apparatuses 4a to 4c and the server 3 with all information included.

The server 3 associates received public meta data with contents data, and stores the resultant data in a database described later.

The public meta data indicates the user information described later, evaluation/statistic information, or play-back control information (management information), etc., that is, theprovideduser information/evaluation/statistic information or play-back control information, etc. When the server 3 receives any information of the user information, evaluation/statistic information or play-back control information, it updates, using the received information, the public meta data to which the received information belongs.

Each of the broadcast reception-record apparatuses 4a to 4c receives contents data, records the received contents data on the built-in hard disk or optical disk, and generates corresponding local meta data.

Each of the broadcast reception-record apparatuses 4a to 4c edits contents data received at an instruction of a user, updates local meta data in the contents data corresponding to the editing operation, and generates public meta data such as evaluation/statistic information such as a comment evaluating the contents data, etc. or play-back control information, etc. obtained by editing the contents data.

Furthermore, each of the broadcast reception-record apparatuses 4a to 4c records the generated local meta data on the built-in hard disk or optical disk, and transmits public meta data in the database of the server 3 over the network 2.

On the other hand, each of the broadcast reception-record apparatuses 4a to 4c receives public meta data, registered by another user, from the server 3 over the network 2, and simultaneously reads the local meta data recorded on the built-in hard disk or optical disk, plays-back the contents data corresponding to the public meta data based on the received public meta data and local meta data, and displays various information about the contents data.

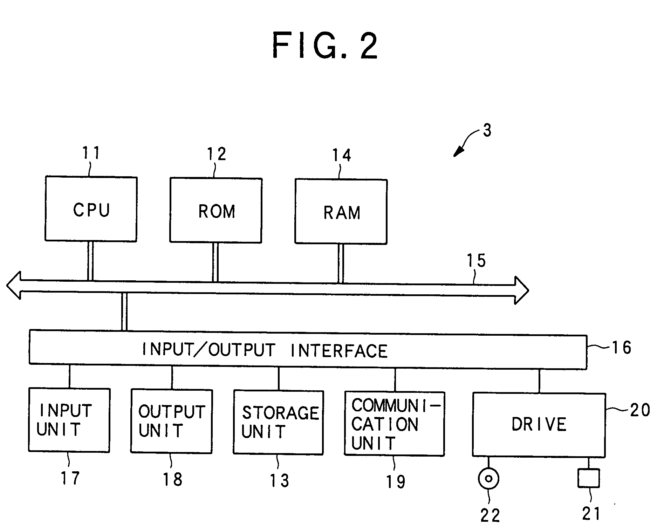

The configuration of the server 3 according to the present embodiment is explained below by referring to FIG. 2. FIG. 2 is a block diagram showing the configuration of the server 3 shown in FIG. 1.

As described above, the server 3 according to the present embodiment receives the public meta data, corresponding to the contents data recorded and edited by the broadcast reception-record apparatuses 4a to 4c, over the network 2. When the received public meta data is new data, it is newly recorded in an internal database, etc. When the received public meta data has already existed, the corresponding public meta data is updated, and recorded in the database, etc.

Practically, the server 3 obtains the information transmitted and received to and from the broadcast reception-record apparatuses 4a to 4c with all information such as user information, play-back control information, evaluation/statistic information of public meta data, etc., included, and, information such as the evaluation comment, the access frequency, the evaluation average value of evaluation/statistic information mentioned below, etc. in the public meta data provided by each of the broadcast reception-record apparatuses 4a to 4c by each user are updated and recorded with new data different from the recorded original data, and so that such information is obtained.

The user information and play-back control information in the public meta data provided by each user through each of the broadcast reception-record apparatuses 4a to 4c is provided to the server 3 by updating the original data recorded in advance by each user. The public meta data is uniquely generated by each user recording the record date and time and the channel for the program record information.

Furthermore, the server 3 transmits the public meta data to the broadcast reception-record apparatuses 4a to 4c over the network 2 at a request of the broadcast reception-record apparatuses 4a to 4c based on the instruction of a user.

Then, the server 3 performs an authenticating operation to identify the broadcast reception-record apparatuses 4a to 4 c permitted to transmit and receive each public meta data relating to the transmission and the reception of public meta data to and from each of the broadcast reception-record apparatuses 4a to 4c. The server 3 registers necessary information for authentication for the user of each of the broadcast reception-record apparatuses 4a to 4c in advance in a record medium such as a database.

As shown in FIG. 2, the server 3 according to the present embodiment comprises a CPU (central processing unit) 11, for controlling the operation of each unit when each public meta data is transmitted and received, ROM (read only memory) 12 for storing each program when the public meta data is transmitted and received, a storage unit 13 configured by a record medium such as a hard disk, etc., RAM (random access memory) 14 temporarily storing various data or program when public meta data is transmitted and received, and an input/output interface 16.

In the present embodiment, the CPU 11 performs various processes according to the program stored in the ROM (read only memory) 12 or the program loaded into the RAM (random access memory) 14 fromthe storage unit 13. The RAM 14 also appropriately stores necessary data in order for the CPU 11 to perform various processes.

The CPU 11, ROM 12, and RAM 14 are interconnected through a bus 15, and the storage unit 13 is connected to the bus 15 over the input/output interface 16, and to the CPU 11, ROM 12, and RAM 14.

The server 3 of the present embodiment comprises an input unit 17 comprising a keyboard, a mouse, etc., an output unit 18 comprising a display such as a CRT, an LCD, etc., as well as a speaker, etc., a storage unit 13 configured by a hard disk, etc. , and a communication unit 19 configured by a modem, a terminal adapter, etc. The input unit 17, the output unit 18, and the communication unit 19 are connected to the bus 15 over the input/output interface 16.

The communications unit 19 performs a communicating process for the broadcast reception-record apparatuses 4a to 4c over the network 2, and especially performs authenticating and other communicating processes in the transmission and reception of public meta data.

A drive 20 for storing each program for performing each process when public meta data is transmitted and received as necessary is connected to the input/output interface 16. An optical disk 22, etc. is appropriately mounted on the drive 20. Therefore, at an instruction of the CPU 11, a computer program read from the optical disk 22, especially, a program for transmission and reception of public meta data described later according to the present embodiment is installed in the storage unit 13 as necessary.

A database 21 records public meta data transmitted from each of the broadcast reception-record apparatuses 4a to 4c, the public meta data is recorded in the database 21 at an instruction of the CPU 11, and the public meta data already recorded in the database is read.

Therefore, the server 3 receives new public meta data transmitted from each of the broadcast reception-record apparatuses 4a to 4c through the communication unit 19, and records the data in the database 21. Practically, all of the program record information, user information, play-back control information, and evaluation/statistic information are recorded in the database 21 by receiving the new public meta data transmitted from each of the broadcast reception-record apparatuses 4a to 4c.

The operation of the server 3 according to the present embodiment is explained below.

The information necessary for authenticating a user of the broadcast reception-record apparatuses 4a to 4c, for example, an ID and a password, etc. is registered in advance in the database 21 or the optical disk 22 of the server 3. When the CPU 11 can authenticate the user based on the registered ID and password, the CPU 11 registers public meta data such as user information described later, play-back control information, evaluation/statistic information, etc., that is, generates a notification message to permit registration of public meta data, and transmits the message as message information to the broadcast reception-record apparatuses 4a to 4c through the communication unit 19.

Furthermore, when public meta data is transmitted to the CPU 11 according to the message information transmitted from the broadcast reception-record apparatuses 4a to 4c, the CPU 11 receives the public meta data transmitted through the communication unit 19, and, when the received public meta data is new data, it records the public meta data in the database 21 through the input/output interface 16 and the drive 20. If the received public meta data has already existed, the existing public meta data is overwritten through the input/output interface 16 and the drive 20.

Practically, the CPU 11 sequentially and individually incorporates the public meta data into the database 21 by recording public meta data such as transmitted user information, play-back control information, and evaluation/statistic information, etc. in the database 21 through the communication unit 19.

Furthermore, as described later, when requested public meta data is selected by a user of the broadcast reception-record apparatuses 4a to 4c, the server 3 reads the selected public meta data from the database 21 or optical disk 22, and transmits the data to the broadcast reception-record apparatuses 4a to 4c through the input/output interface 16, communication unit 19, and network 2.

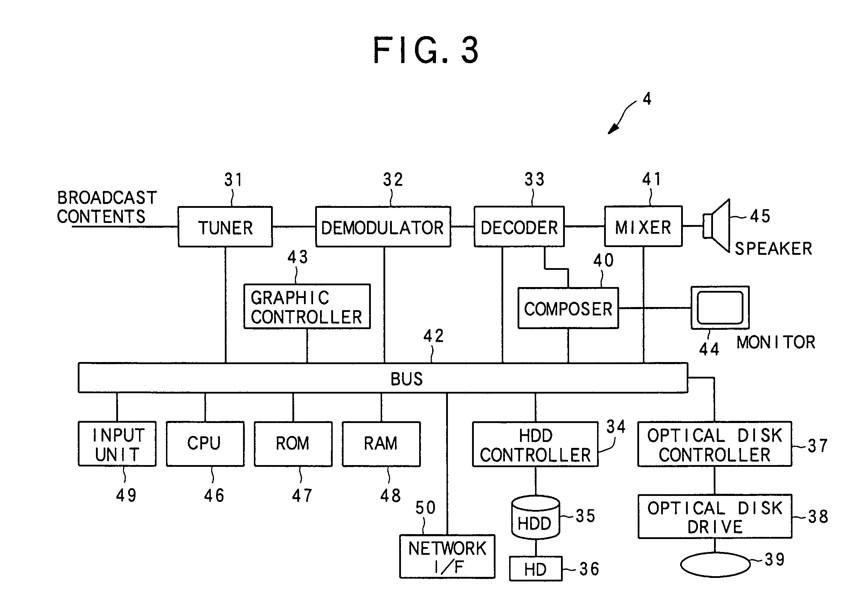

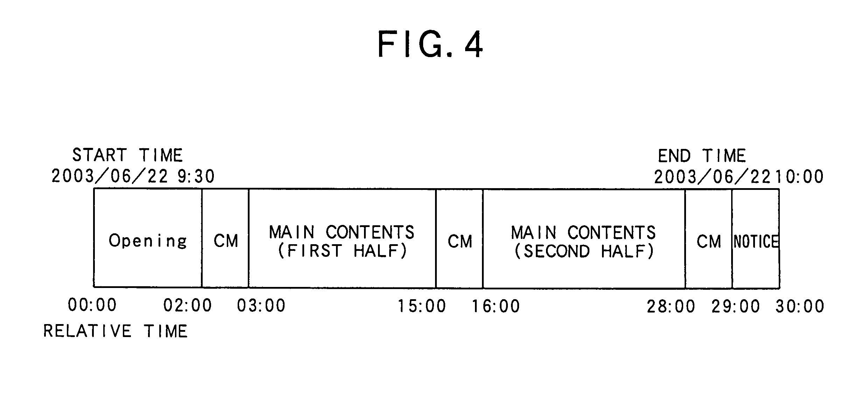

The configuration of the broadcast reception-record apparatuses 4a to 4c according to the present embodiment is explained below by referring to FIGS. 3 and 4. FIG. 3 is a block diagram showing the configuration of the broadcast reception-record apparatus 4 shown in FIG. 1. FIG. 4 shows an example of the broadcast contents received by the broadcast reception-record apparatus 4. When it is not necessary to individually distinguish the broadcast reception-record apparatuses 4a to 4c, it is simply referred to as a broadcast reception-record apparatus 4.

In FIG. 3, a tuner 31 receives electric waves including broadcast contents, and outputs a base band signal to a demodulator 32. The demodulator 32 demodulates a base band signal output from the tuner 31, and outputs it to a decoder 33.

The decoder 33 decodes a demodulation signal input from the demodulator 32, or a signal read from a hard disk (HD) 36 through a hard disk drive (HDD) controller 34, and a hard disk drive (HDD) 35, based on, for example, the MPEG (moving picture expert group) method, etc., and outputs a video signal to a composer 40, and outputs an audio signal to a mixer 41.

Similarly, the decoder 33 decodes a signal read from an optical disk 39 through an optical disk controller 37 and an optical disk drive 38, based on, for example, the MPEG method, etc., and outputs a video signal to the composer 40, and outputs an audio signal to the mixer 41.

The composer 40 superimposes the video signal generated and output by a graphic controller 43 through a bus 42 as necessary on the video signal input from the decoder 33, and outputs the result to a monitor 44. The mixer 41 mixes another audio signal as necessary with the audio signal provided by the decoder 33, and provides the result to a speaker 45.

When a video signal is input, the monitor 44 outputs an image corresponding to the input video signal, and, when an audio signal is input, the speaker 45 generates a voice corresponding to the input audio signal.

ACPU 46 controls each unit of the broadcast reception-record apparatus 4 through the bus 42, and performs various processes. A ROM 47 stores necessary programs, parameters, etc. for various processes performed by the CPU 46. RAM 48 stores necessary programs, data, etc. for various processes performed by the CPU 46.

On the other hand, the CPU 46 records contents data in the hard disk 36 or optical disk 39, based on an instruction of a user input by an input unit 49 as described later, and generates local meta data. The CPU 46 edits recorded contents data, and generates public meta data in the contents data.

Practically, for example, themonitor 44 displays a contents data edition screen (contents play list, evaluation/statistic information input text box, etc.), and the user performs an editing operation by the input unit 49, thereby allowing the CPU 46 to edit contents data and generate public meta data such as user information of the edited contents data, play-back control information, or evaluation/statistic information, etc.

According to the present embodiment, the contents data recorded based on an instruction of a user is generated as the information configuring the materials of video data for opening (hereinafter referred to as opening data), video data for commercial (hereinafter referred to as commercial data), and video data indicating a notice of the main contents of the next time (hereinafter referred to as a notice data). The CPU 46 of the broadcast reception-record apparatus 4 generates the data of the starting time and the ending time of the user-generated opening data, commercial data, notice data, main contents data, and simultaneously generates public meta data together with meta data such as attribute information generated by a user.

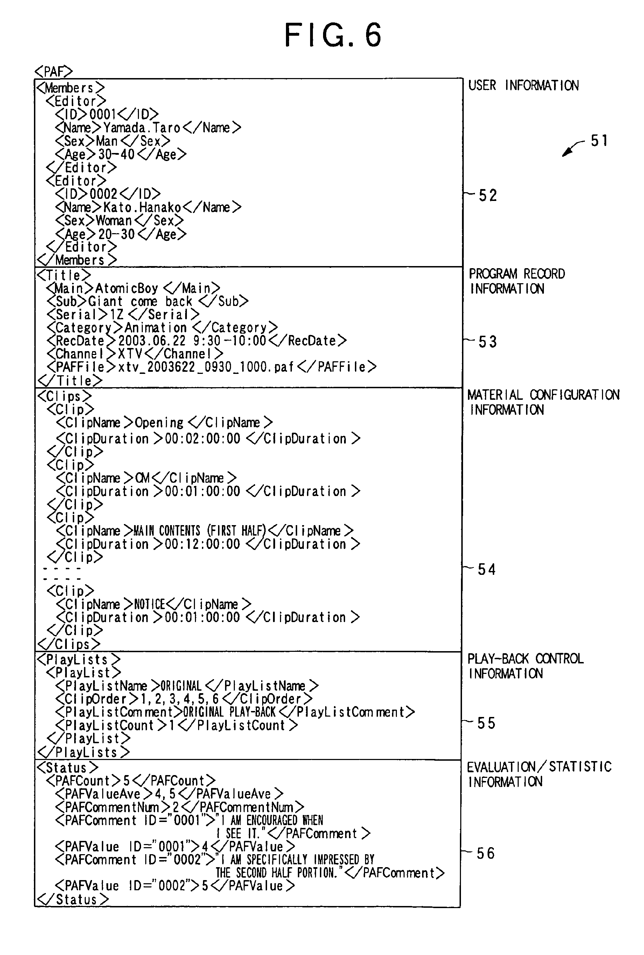

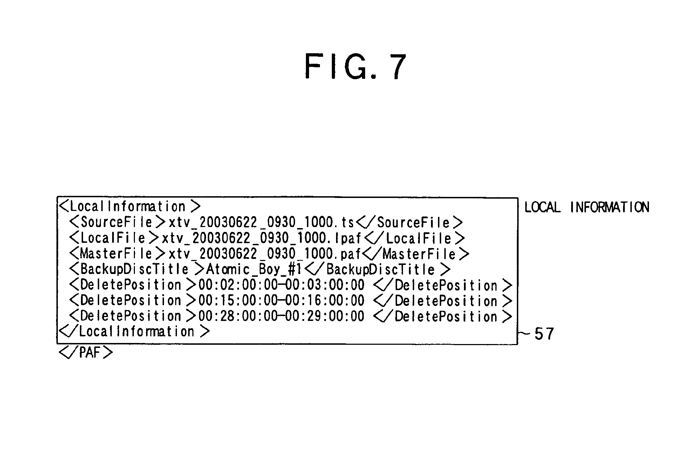

The generated public meta data is described by the CPU 46 in the XML (extensible Markup Language) format shown in FIG. 6, and the public meta data in the XML format is transmitted to the server 3. The local meta data is generated in the XML format shown in FIG. 7 when contents data is recorded.

The details of received public meta data and generated local meta data are described later.

The input unit 49 is configured by a number of keys such as various confirmation buttons, operation buttons for input of various operation commands, a ten-key and other number keys, etc., and performs various operations such as a communicating process, and outputs a signal operated by a user corresponding to an operation to the CPU 46 through the bus 42.

A network interface (I/F) 50 performs a communicating process over the network 2 at an instruction of the CPU 46. Especially, according to the present embodiment, public meta data stored in the server 3 is received, and public meta data generated by the broadcast reception-record apparatus 4 is transmitted.

The hard disk drive controller 34 controls the hard disk drive 35, records necessary data in the hard disk 36, and reads recorded data. Similarly, the optical disk controller 37 controls the optical disk drive 38, records necessary data in the optical disk 39, and reads recorded data.

For example, the CPU 46 according to the present embodiment configures the play-back/providing device, the determination device, and the control device of the present invention, and the input unit 49 configures the selection device according to the present invention. The network interface 50 configures the acquisition device according to the present invention. The hard disk (HD) 36 or the optical disk 39 configures the recording device. The monitor 44 and the speaker 4 5 according to the present embodiment configures the play-back/providing device according to the present invention together with the CPU 46.

The operations of the broadcast reception-record apparatus 4 according to the present embodiment are explained below.

When a user of the broadcast reception-record apparatus 4 operates the input unit 49, an instruction to receive contents data of a predetermined channel is issued, and the input of the instruction is received from the input unit 49, then the CPU 46 controls the tuner 31 to receive an electric wave of the contents of the channel specified by the tuner 31.

Upon receipt of an electric wave of a specified channel, the tuner 31 outputs the received signal to the demodulator 32. The demodulator 32 demodulates a received signal, and outputs it to the decoder 33.

Furthermore, the decoder 33 decodes a demodulation signal, and outputs a video signal to the monitor 44 through the composer 40. The decoder 33 also outputs an audio signal to the speaker 45 through the mixer 41.

Thus, when a video signal is output to the monitor 44, and an audio signal is output to the speaker 45, an image corresponding to the video signal is displayed on the monitor 44, and the voice corresponding to the audio signal is output from the speaker 45, and therefore, the user of the broadcast reception-record apparatus 4 can view the broadcast contents of a desired channel.

When a user specifies recording of the received broadcast contents, the signal output from the decoder 33 is provided to the hard disk drive 35 or the optical disk drive 38 through the hard disk drive controller 34 or the optical disk controller 37, and is recorded on the built-in hard disk 36 or optical disk 39.

In this case, the CPU 46 extracts SI information indicating the attribute, etc., of the contents data received with the contents data to the tuner 31, and the extracted SI information is recorded with the contents data on the built-in hard disk 36 or optical disk 39.

The recording operation can also be performed, even if a video signal and an audio signal are not output from the monitor 44 or speaker 45.

The contents data recorded on the built-in hard disk 36 or optical disk 39 is explained by referring to FIG. 4.

As shown in FIG. 4, contents data is image data configured by opening data, commercial data (advertisement information), main contents data, and notice data.

For example, as shown in FIG. 4, when any contents data is recorded, a user generates as material configuration information relating to a relative time based on the starting time of the broadcast contents in the contents data: the opening data in the position from 0 min. 00 sec. to 2 min. 00 sec.; the commercial data in the position (advertisement information) from 2 min. 00 sec. to 3 min. 00 sec.; the main contents data (first half) in the position from 3 min. 00 sec. to 15 min. 00 sec.; the commercial data in the position from 15 min. 00 sec. to 16 min. 00 sec. ; the main contents data (second half) in the position from 16 min. 00 sec. to 28 min. 00 sec.; the commercial data in the position from 28 min. 00 sec. to 29 min. 00 sec.; and the notice data in the position from 29 min. 00 sec. to 30 min. 00 sec.

The recorded contents data is recognized according to the date and time obtained when the contents data is recorded and the channel information, and, for example, in the contents data shown in FIG. 4, the broadcast is the data of a TV channel for 30 minutes starting from 9:30 on June 22, 2003, and terminating at 10: 00 on June 22, 2003. The CPU 46 generates local meta data according to the information.

The CPU 46 generates public meta data corresponding to the contents data edited based on each of the above-mentioned data. The CPU 46 transmits the generated public meta data to the server 3 through the network interface 50. The local meta data generated when data is recorded on the built-in hard disk 36 or optical disk 39.

On the other hand, when play-back of the contents data recorded on the hard disk 36 or optical disk 39 is specified based on the operation of the input unit 49, the CPU 46 controls the hard disk drive controller 34 or the optical disk controller 37, and plays-back the specified contents data recorded on the hard disk 36 of the hard disk drive 35 or the optical disk 39 of the optical disk drive 38.

When the specified contents data is played-back, the contents data output from the hard disk 36 or the optical disk drive 38 is decoded by the decoder 33, the video signal in the contents data is output to the monitor 44 through the composer 40, and the audio signal in the contents data is output to the speaker 45 through the mixer 41.

As in the case of providing contents data of a predetermined channel for view, a video signal is output to the monitor 44, and an audio signal is output to the speaker 45, thereby displaying an image corresponding to the video signal on the monitor 44, and supplying the voice corresponding to the audio signal to the speaker 45. Therefore, a user of the broadcast reception-record apparatus 4 can be provided with contents data of a desired channel for view.

The broadcast reception-record apparatus 4 edits the contents data recorded on the hard disk 36 or optical disk 39 as necessary at an instruction of a user, and records the editing status as local meta data or public meta data on the hard disk 36 or optical disk 39.

To generate public meta data such as user information, play-back control information, evaluation/statistic information, etc., for example, a contents data edition screen (contents play list, evaluation/statistic information input text box, etc) is displayed on the monitor 44. When a user uses the input unit 49 in performing an editing operation, the CPU 46 edits contents data, and generates public meta data of the edited contents data.

Furthermore, the public meta data such as user information, play-back control information, evaluation/statistic information, etc., is described by the CPU 46 in the data structure of the XML format shown in FIG. 6, and the public meta data of the data structure in the XML format is transmitted to the server 3.

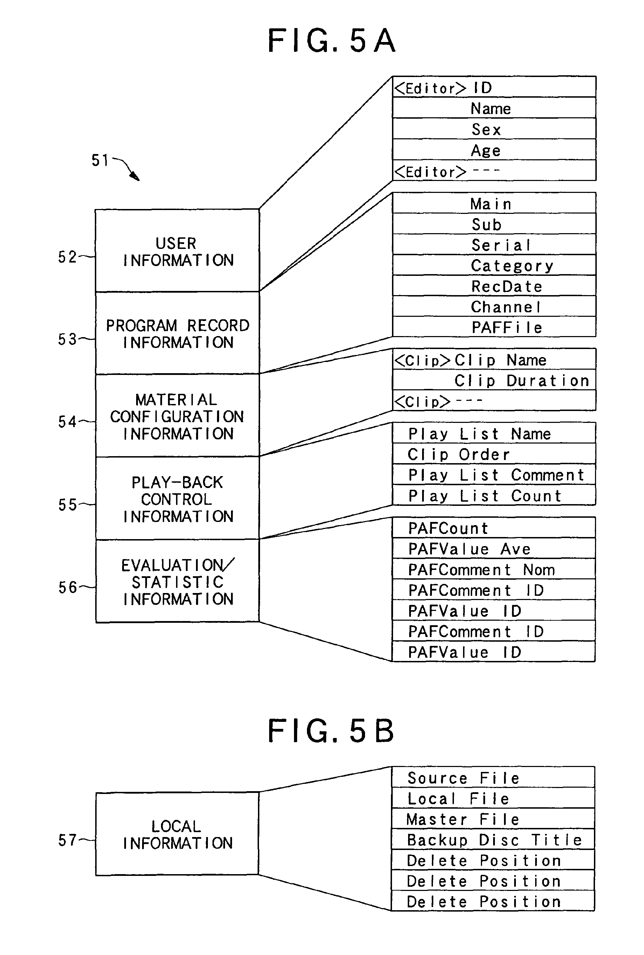

Next, the public meta data and the local meta data received by the broadcast reception-record apparatus 4 are explained by referring to FIGS. 5 through 7.

FIGS. 5A and 5B are explanatory views showing the schematic structure of the meta data of broadcast contents. FIGS. 6 and 7 are explanatory view showing the details of the meta data shown in FIGS. 5A and 5B.

As shown in FIG. 5A, public meta data 51 is configured by:
information 52 about a user who provides play-back control information obtained when contents data is edited (hereinafter referred to as user information); information 53 about an attribute of contents data (hereinafter referred to as program record information); information 54 about the material such as image data in contents data (hereinafter referred to as material configuration information); information 55 about play-back control when contents data is edited (hereinafter referred to as play-back control information) ; and information 56 about the evaluation/statistics of each user of contents data (hereinafter referred to as evaluation/statistic information).

The user information 52 shown in FIG. 5A records the information about an editor who has edited the contents data to which the public meta data belongs or a plurality of users who have evaluated the contents data. Practically, each piece of the information <ID> (personal authentication) which is the identification information about the name of the editor or the user <Editor> who has evaluated the data, the <Name> indicating its name, the <Sex> of the editor or the user, and the <Age> of the editor or the user is described. That is, the public meta data 51 describes the information for identification of a user who has edited contents data and has provided information such as play-back control information 55, etc. used in the editing operation, and each piece of information such as the name, sex, age, etc. of an editor who has edited contents data, and also describes the information about a user for specifying a user who has thought and evaluated a program as the user information 52.

For example, the user information 52 records the information about a user in two editors as shown in FIG. 6, and the user information 51 shown in FIG. 6 records: 0001 as <ID> (personal authentication) of <Editor>; and Yamada. Taro as <Name>; Man as <Sex>; 30 to 40 as <Age>, and also records the information including: 0002 as <ID> (personal authentication) of <Editor>; Kato. Hanako as <Name>; Woman as <Sex>; and 20 to 30 as <Age>.

If the broadcast reception-record apparatus 4 obtains the user information 52, any user can be specified using the user information 52. Therefore, public meta data relating to various contents data such as a list of contents data edited by the specified user, a list of user opinions about various contents data, etc. can be obtained.

The program record information 53 describes the information such as the title of a recorded program, the recording date, the recording channel, etc. as the information specifying the contents data to which the public meta data belongs. Practically described information can be: <Main> (main title) of the contents data to which the public meta data belongs; <Sub> (sub-title) indicating the sub-title, if it is given, of the data; <Serial> (serial number) indicating the ordinal number of a serialized drama; <Category> indicating the genre of the contents data; <RecDate> (recording date) indicating the date and time on which the contents data is broadcast; <Channel> (recording channel) indicating the channel on which the contents data is broadcast; <PAFFile> (file name) indicating the file name of public meta data of the contents data.

For example, the program record information 53 records the information as shown in FIG. 6 including: Atomic Boy as <Main> (main title); Giant come back as <Sub> (sub-title) ; 12 as <Serial> (serial number); Animation as <Category>; 2003.06.22 09:30-10:00 as <RecDate> (recording date); XTV as <Channel> (recording channel); xtv_2003. 0622_0930_1000.paf as <PAFFile> (file name).

By using the 53, the broadcast reception-record apparatus 4 can display a program recorded in the server 3 including the broadcast date, title, genre, and retrieve data by using the information as a key word.

The program record information 53 refers to the information basically similar to the above-mentioned SI information, specifies contents data, and indicates the attribute of the data.

The material configuration information 54 describes the information for specifying video information including actual audio information about the contents data to which public meta data belongs. Practically, <Clip Name> indicating the file name of the video information, and <Clip Duration> indicating the information about the time of the video information are described.

Practically, the opening of a recorded program, the commercial (CM) , and the file name for designation of the video information such as the main contents, the notice data, etc. are described as <Clip Name>, and the relative time information for the entire recording time in the recorded program is described as <Clip Duration>.

For example, when the contents data as shown in FIG. 4 is applied, the material configuration information 54 describes the opening as <Clip Name>, 00:02:00:00 as <ClipDuration>, CM as <Clip Name>, and 00:01:00:00 as <ClipDuration> as shown in FIG. 6. Thus, as shown in FIG. 4, the video information indicates the video information as the opening in the position from 0 min. 00 sec. to 2 min. 00 sec., and indicates the commercial data (advertisement information) in the position from 2 min. 00 sec. to 3 min. 00 sec.

Additionally, the main contents data (first half) , the main contents data (second half), commercial data, and notice data are similarly described.

Each piece of video information in the material configuration information 54 according to the present embodiment can be not only a group of video information by category such as the opening, commercial, etc., but also a group of video information by detailed item such as a chapter, etc.

The play-back control information 55 records the information indicating the play-back order of the data showing the material configuration information 54 about the contents data by the above-mentioned editor recorded in the public meta data 51 in the contents data to which the public meta data belongs. Practically, the information including: <PlayListName> (play-back name) indicating the name of the edited contents data; <ClipOrder> (play-back order) indicating the play-back order of the material configuration information 54 relating to the contents data; <PlayListComment> (play-back comment) which is the information about the comment provided by an editor when the edited contents data is played-back; and <PlayListCount> (play-back count) which is the information about the frequency of the play-back of the edited contents data are described.

The play-back control information 55 describes the play-back method of a program by using a tag described in the material configuration information 54.

For example, as shown in FIG. 6, the play-back control information 55 recordsthe information including: the original as <PlayListName> (play-back name) ; 1, 2, 3, 4, 5, 6 as <ClipOrder> (play-back order) ; the original play-back as <PlayListComment> (play-back comment) ; and 1 as <PlayListCount> (play-back count) , which indicates the play-back in order from the header to the end of the data indicated by the material configuration information 54.

The evaluation/statistic information 56 records the information about user's comment and statistics such as the opinion and evaluation for the contents data to which the public meta data belongs, the use frequency of the meta data of the broadcast contents, and the evaluation and comment for the user who has evaluated a program and given an opinion for the program.

Practically, the evaluation/statistic information 56 describes the information including: <PAFCount> (access frequency of meta data of broadcast contents) indicating the access frequencyfroma user to the publicmeta data; <PAFValueAve> (evaluation average value) indicating the average value of 5-level evaluation of a user for a program mentioned below; <PAFCommentNum> (number of pairs of comment and evaluation information) indicating the number of pairs of the comment of a user for the contents data and evaluation information thereof; and <PAFComment> (comment for program) indicating the comment of a user for the contents data.

For example, as shown in FIG. 6, the evaluation/statistic information 56 records the text information including: five times as <PAFCount> (access frequency of meta data of broadcast contents); 4.5 as <PAFValueAve> (evaluation average value); twice as <PAFCommentNum> (number of pairs of comment and evaluation information); "I am encouraged when I see it." as a comment of an editor of ID0001 as <PAFComment> (comment for program); and "I am specifically impressed by the second half portion." as a comment of an editor of ID0002.

When the broadcast reception-record apparatus 4 obtains the evaluation/statistic information 56, the broadcast reception-record apparatus 4 can provide a user with the evaluation/statistic information 56, as mentioned below. Therefore, the user can be informed of the evaluation for a program and the attention level, and the user can also take part in the discussion. Especially, the PAFCount tag of the evaluation/statistic information 56 indicates the access frequency of the public meta data. Therefore, the user can be informed of the attention level of the program.

As shown in FIG. 5B, the local meta data is configured by local information 57, and records the information including the file name of contents data recorded in the broadcast reception-record apparatus 4 and the editing information about the contents data, etc., and is used when a user associates the contents data recorded on the hard disk 36 with the public meta data recorded on the server 3.

The local information 57 describes the title name information assigned to an optical disk to specify the optical disk 39 when the user records a program on the optical disk 39, and the information for correction of a difference when there is the difference from the meta data on the server 3 by a user adding an edit operation such as deletion, etc., of a commercial to the program recorded on the hard disk 36 using a DeletePosition tag.

Practically, the local information 57 describes the information including: <SourceFile> (record file name), <LocalFile> (local file), <MasterFile> (program information common file name), <BackupDiscTitle> (title assigned for identification of optical disk when a backup is made on the optical disk 39), and <DeletePosition> (deleted portion).

That is, the local information 57 describes the information individually used by each user such as the file name on a hard disk of broadcast contents, the title assigned to a disk when the broadcast contents are backed up on the optical disk, and the generation date, etc.

For example, as shown in FIG. 7, in the local information 57 recorded is the information including: xtv_2003.0622_0930_1000.ts as <SourceFile> (record file name); xtv_2003.0622_0930_1000.1paf as <LocalFile> (local file); Atomic_Boy_#1 as <BackupDiscTitle> (title assigned for identification of optical disk when a backup is made on the optical disk 39); and 00:02:00:00-00:03:00:00 as <DeletePosition> (deleted portion).

The information 00:02:00:00-00:03:00:00 recorded in <DeletePosition> (deleted portion) indicates that the commercial data (advertisement information) has been deleted in the position from 2 min. 00 sec. to 3 min. 00 sec. shown in FIG. 4.

Using the local information 57, the program recorded on the hard disk 36 by a user can be associated with the meta data of the broadcast contents on the server 3. When the user backs up the program on the optical disk 39, the title information for designation of the optical disk 39 is displayed on the monitor 44. Furthermore, an editing operation such as deletion of a commercial, etc. is added to the program recorded by a user on the hard disk 36 using a DeletePosition tag. When there is a difference from the meta data on the server 3, the information for correction of the difference is described.

Thus, the local information 57 is read from the built-in hard disk 36 or optical disk 39 when the meta data of the broadcast reception-record apparatus 4 is used, the public meta data other than the local information 57 is received from the server 3 over the network 2 for use in combination with the local information 57. Since the local information 57 is user specific information, each user can have the information individually.

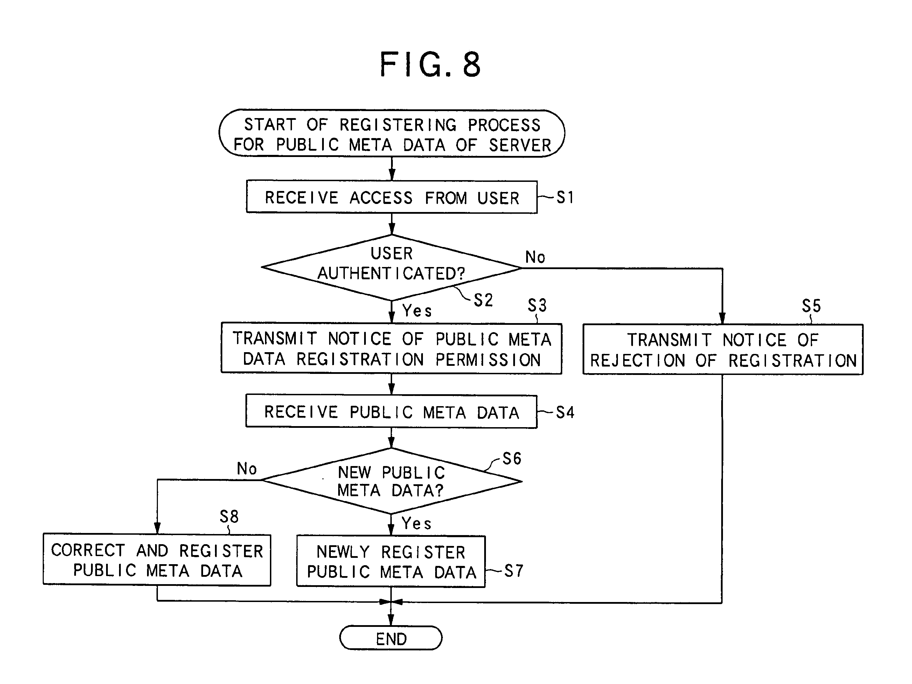

The registering process of registering the public meta data generated by the broadcast reception-record apparatus 4 to the server 3 is described below by referring to FIG. 8.

FIG. 8 is a flowchart showing the registering process of the public meta data to the server.

As shown in FIG. 8, when accessed by the broadcast reception-record apparatus 4 through the communications unit 19 in step S1, the CPU 11 of the server 3 reads the message screen requesting the transmission of ID and password stored in the storage unit 13, and transmits the information about the message screen from the communication unit 19 over the network 2.

At this time, the broadcast reception-record apparatus 4 displays the message screen on the monitor 44, and prompts a user to input an ID and password. Furthermore, in the broadcast reception-record apparatus 4, when the input unit 49 inputs the ID and password, the ID and password through the network interface 50 are transmitted to the server 3 over the network 2.

When the communications unit 19 receives the ID and password transmitted from the broadcast reception-record apparatus 4, the CPU 11 checks the authentication of a user through the broadcast reception-record apparatus 4a and communication unit 19 in step S2.

Practically, when the CPU 11 receives an ID and password from the broadcast reception-record apparatus 4 through the communication unit 19, the ID and password are compared with the user ID and password stored in advance in the database 21.

When the ID and password transmitted from the broadcast reception-record apparatus 4 are compared with the user ID and password stored in advance in the database 21, and they match with one another (YES in step S2), the CPU 11 determines that the user who is operating the broadcast reception-record apparatus 4 can be authenticated, and control is passed to step S3. The CPU 11 generates a message of notice of the permission to register public meta data, and transmits it to the broadcast reception-record apparatus 4 through the communication unit 19.

At this time, the CPU 11 receives the public meta data from the broadcast reception-record apparatus 4 in response to the public meta data registration permission notice through the communication unit 19 (step S4).

In step S2, if the ID and password transmitted from the broadcast reception-record apparatus 4 do not match the ID and password stored in advance in the storage unit 13 (NO in step S2), then the CPU 11 determines that the user who is operating the broadcast reception-record apparatus 4a cannot be authenticated, generates a message of notice of the rejection of registration, and transmits it to the broadcast reception-record apparatus 4a through the communication unit 19.

On the other hand, when the CPU 11 of the server 3 receives public meta data in step S4, it determines whether or not the received public meta data is new data (step S6) . If the received public meta data is new (YES in step S6), then the CPU 11 performs new registration for the public meta data (step S7). If the received public meta data is not new data (NO in step S6) , then the CPU 11 corrects and registers public meta data (step S8).

As mentioned above, in the new registration and correction registration of public meta data, when data in the XML format shown in FIG. 6 is newly registered, the data is registered in the database 21 through the input/output interface 16 and the drive 20. If the data in the XML format is corrected and registered, the public meta data existing in the database 21 is overwritten through the input/output interface 16 and the drive 20.

As described above, the storage unit 13 in the server 3 receives user generated publicmeta data froma number of broadcast reception-record apparatuses 4, and registers them.

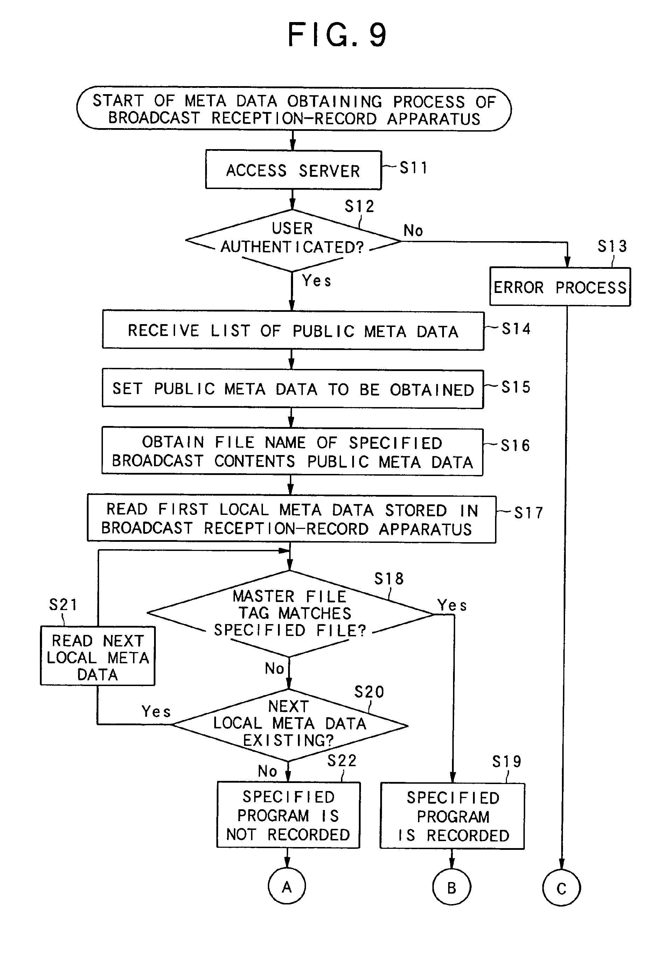

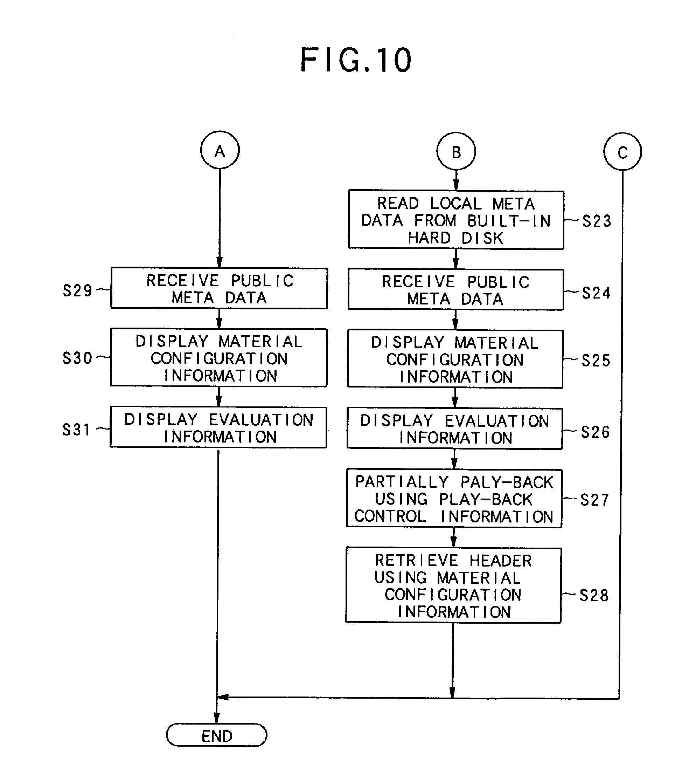

The public meta data obtaining process in the broadcast reception-record apparatus 4 is explained below by referring to FIGS. 9 and 10.

FIG. 9 is a flowchart showing the first process in the public meta data obtaining process of the broadcast reception-record apparatus according to the present invention. FIG. 10 is a flowchart showing the second process in the public meta data obtaining process of the broadcast reception-record apparatus according to the present invention.

As shown in FIG. 9, when a user inputs an access instruction to the server 3 through the input unit 49 in step S11, the CPU 46 accesses the server 3 through the network interface 50.

At this time, upon receipt of the access from the broadcast reception-record apparatus 4 through the communication unit 19, the server 3 reads a message screen requesting the transmission of the ID and password stored in the storage unit 13, and transmits the information about the message screen to the broadcast reception-record apparatus 4 through the communication unit 19 over the network 2.

When the network interface 50 receives the information about the message screen which prompts an input of ID and password transmitted from the server 3, that is, when the server 3 requests the transmission of an ID and a password, the CPU 46 displays a message screen prompting the input of ID and password on the monitor 44, and the user is prompted to input them.

When the user of the broadcast reception-record apparatus 4 inputs the ID and password using the input unit 49 based on the display, the CPU 46 receives the ID and password, transmits them to the server 3 through the network interface 50 to allow the server 3 to authenticate a user (step S12).

At this time, the server 3 performs an authenticating process in the same manner as the above-mentioned public meta data registering process based on the ID and password. If the user can be authenticated, such information is transmitted to the broadcast reception-record apparatus 4 together with a number of file names of public meta data and the program record information of meta data of the broadcast contents corresponding to the file names as a list of meta data. If the user cannot be authenticated, then such information is transmitted to the broadcast reception-record apparatus 4.

When a correct authentication result cannot be obtained in step S12 (NO in step S12), the CPU 46 receives through the network interface 50 the information that the user cannot be authenticated. The CPU 46 performs an error process based on the information (step S13). That is, in this case, the user of the broadcast reception-record apparatus 4 cannot obtain the meta data, so the CPU 4 6 terminates the public meta data obtaining process through the process C shown in FIG. 9.

If a correct authentication result is obtained in step S12 (YES in step S12), the CPU 46 receives the data about a list of public meta data transmitted by the server 3, and displays it on the monitor 44 by genre (step S14).

Then, when the user sees the display contents and specifies one desired public meta data from the list of public meta data using the input unit 49 (step S15), the CPU 46 retrieves a file name of the selected public meta data from the list of the public meta data (step S16). The CPU 46 reads the local information 57 of the latest date and time stored in the hard disk 36 of the broadcast reception-record apparatus 4 (step S17).

Since the file name of the local information 57 stored in the broadcast reception-record apparatus 4 indicates the broadcast station name and the recording date and time like xtv_20030622_0930_1000.1paf, the read is performed in order of latest date and time according to the information about the recording date and time.

Then, the CPU 46 determines whether or not the master file tag of the obtained local information 57 matches the contents meta data specified in step S15 (step S18).

If the master file tag matches the specified contents meta data (YES in step S18), a specified program is recorded in the broadcast reception-record apparatus 4 (step S19), and the CPU 46 passes to the process B shown in FIG. 10.

If the master file tag does not match the specified contents meta data (NO in step S18), the CPU 46 determines whether or not there is the local information for the date and time after the latest date and time in step S 20. If the next local information exists (YES in step S20), the local information in the contents data next recorded in step S21 is read, and it is sequentially determined whether or not the master file tag of the local information 57 in all the recorded contents data matches the specified contents meta data (step S18).

If there is no subsequent local information (NO in step S20), the specified program is not recorded in the broadcast reception-record apparatus 4 (step S22), and the CPU 46 passes to the process A processed by the CPU 46 shown in FIG. 10.

Then, in the process B, the CPU 46 reads the local information 57 corresponding to the contents data specified in step S15 from the built-in hard disk 36 (step S23) , and then requests the server 3 to transmit the public meta data belonging to the contents data, and receives public meta data transmitted from the server 3 at the request (step S24).

In steps S23 and S24, when a specified program is recorded, the local information 57 for individual use by the user of the broadcast reception-record apparatus 4, that is, <SourceFile> (record file name), <LocalFile> (local file), <MasterFile> (program information common file name), <BackupDiscTitle> (title assigned for identification of optical disk when a backup is made on the optical disk 39), and <DeletePosition> (deleted portion) are read from the hard disk 36 of the broadcast reception-record apparatus 4, and then the CPU 46 requests the server 3 to transmit the public meta data to which the specified contents data belongs through the network interface 50. At this time, the server 3 reads the public meta data from the database 21, and transmits the read public meta data through the communication unit 19 to the broadcast reception-record apparatus 4. Therefore, the broadcast reception-record apparatus 4 can receive the transmitted public meta data.

Then, in step S25, the material configuration information 54 in the obtained public meta data is displayed on the monitor 44. That is, in step S25, <Clip Name> (information such as the opening of a recorded contents data, CM, main contents, notice information, etc.), and <ClipDuration> the relative time information about the recorded contents data are displayed.

In step S26, the evaluation/statistic information 56 is displayed based on the obtained public meta data. That is, in step S26, various information including: <PAFCount> (access frequency of meta data of broadcast contents); <PAFValueAve> (evaluation average value); <PAFCommentNum> (number of pairs of comment and evaluation information); <PAFComment> (comment for program); and <PAFValue> (evaluation for program) are displayed.

For example, as described above, when a list of evaluations and comments for the specified program by the user of a similar age is displayed, the CPU 46 of the broadcast reception-record apparatus 4 reads the age of a user of the broadcast reception-record apparatus 4 from the age tag of the user information 52 as described later, reads the first PAFComment tag of the evaluation/statistic information 56, reads the matching user information 51 from the ID attribute of the PAFComment tag, and then determines whether or not the Age tag of the user information 52 matches the Age group of the user. If they match, the contents of the PAFComment tag is displayed on the monitor 44.

The CPU 46 receives a list of public meta data registered in the server, receives each public meta data based on the list, rearranges data in order from the larger PAFValueAve tag value of the evaluation/statistic information 56, displays a list of public meta data in order from the higher user evaluation; and rearranges in order from the larger PAFComment tag of the evaluation/statistic information 56, and displays a list of public meta data in order of higher access frequency.

In step S27, partial play-back of contents data is performed, using the play-back/control information 55 in which various information including: <PlayListName> (play-back name), <ClipOrder> (play-back order), <PlayListComment> (play-back comment), and <PlayListCount> (play-back count) is described.

Practically, the CPU 46 reads the contents data recorded on the hard disk 36 or the optical disk 39 by the play-back/control information 55, plays-back the read contents data according to the information described in <ClipOrder> (play-back order) , and performs partial play-back of the edited contents data or the contents data.

Then, instepS28, the header is retrieved, usingthematerial configuration information 54 describing <Clip Name> (information such as the opening of a recorded program, CM, main contents, notice information, etc.) and <ClipDuration> (the relative time information of a recorded program.)

Practically, the material configuration information 54 and the play-back/control information 55 are displayed on the monitor 44, and <PlayListName> (play-back name) and <Clip Name> (information such as the opening of a recorded program, CM, main contents, notice information, etc.) displayed by a user are selected, thereby performing partial play-back of specified contents data and retrieval of the header in the material position of specified contents data.

On the other hand, in step S29 in the process A, the specified contents data has not been recorded. Therefore, public meta data is received from the server 3. That is, in step S29, the user information 52, the program record information 53, the material configuration information 54, the play-back/control information 55, and the evaluation/statistic information 56 are received from the server 3.

Then, in step S30, as in step S25, the material configuration information 54 is displayed on the monitor 44, and then, as in step S26, the evaluation/statistic information 56 is displayed (step S31).

In the present embodiment, a broadcast reception-record apparatus 4 which provides recorded contents data using public meta data having at least one of evaluation/statistic information 56 about evaluation of contents data, and play-back/control information 55 for management of play-back and record of the contents data includes: a hard disk drive 35 and a optical disk 39 which can record the contents data and local meta data indicating an attribute of the contents data; an input unit 49 which selects plural pieces of contents data; a network interface 50 which obtains the reference data in the selected contents data; and a CPU 46 which performs at least one of play-back control of the contents data and providing evaluation information in the contents data based on presence/absence of record of contents data in the hard disk drive 35 and the optical disk 39, the reference data, and the attribute data.

With the above-mentioned configuration, according to the present embodiment, based on the presence/absence of record of the contents data in the hard disk drive 35 and the optical disk 39, reference data, and attribute data, at least one of play-back control of the contents data and provision of the evaluation information in the contents data is performed when the contents data is provided.

Therefore, according to the present embodiment, if public meta data is obtained, the play-back/control information 55 or the evaluation/statistic information 56 can be obtained from the server 3 through the network 2. Therefore, when contents data is recorded, the contents data is played-back based on the play-back/control information 55, and, the evaluation/statistic information 56 is displayedwhen the contents data is played-back, or only evaluation information can be provided when the contents data is not recorded.

As a result, the opinion, the evaluation, and the attention level for the contents data can be known according to the evaluation information, and the incorporation of a comment and the evaluation of a user who has given evaluation into public meta data can further enhance the discussion among users. As a result, based on the information of other persons included in the comments, the play-back of the contents data can be controlled, and the user can be provided with contents data in various systems and methods.

According to the present embodiment, the CPU 46 determines the presence/absence of the record of the contents data based on the local meta data recorded on the hard disk drive 35 and the optical disk 39, and plays-back contents data based on the public meta data when it is determined that the contents data is recorded.

With the above-mentioned configuration, when it is determined that contents data is recorded, in the present embodiment, the contents data can be played-back based on the public meta data. Therefore, contents data can be accurately played-back according to the play-back control information.

Furthermore, according to the present embodiment, the CPU 46 determines the presence/absence of the record of the contents data based on the attribute data recorded on the hard disk drive 35 and the optical disk 39, and provides evaluation information in the contents data together with the contents data when it is determined that the contents data is recorded.

With the above-mentioned configuration, according to the present embodiment, the evaluation information in the contents data can be provided with the contents data. Therefore, according to the evaluation information, the opinion, evaluation, and attention level can be known for the contents data, and the evaluation and the comment of a user who has given the evaluation can be incorporated into public meta data, thereby further enhancing the discussion among the users, and allowing a user to be provided with contents data in various systems and methods.

Furthermore, according to the present embodiment, the CPU 46 determines the presence/absence of the record of the contents data based on the local meta data recorded on the hard disk drive 35 and the optical disk 39. When it is determined that no contents data is recorded, only the evaluation information about the selected contents data is provided.

With the configuration, if it is determined that no contents data is recorded, in the present embodiment, only the evaluation information about the selected contents data is provided. Therefore, even if the contents data has not been recorded, only the evaluation information about the contents data can be viewed regardless of whether or not a program has been recorded.

Furthermore, according to the present embodiment, the public meta data 51 can be encrypted to protect the user information 52 and prevent the falsification of the public meta data 51. If the re-broadcast information can be described in the program record information 53, a user who has failed in recording a desired program can be provided with useful information.

In the above-mentioned present embodiment, when data is recorded on an optical disk, the local information 57 can be recorded not on the hard disk 36, but on the optical disk 39 itself on which the data has been recorded, and the optical disk 39 can be only inserted, thereby obtaining the local information 57 about a recorded program.

In the above-mentioned present embodiment, the broadcast contents are applied, but stream images over a network, and the meta data for the video of package media can also be applied. In this case, meta data generated in advance can be distributed with video data. Additionally, the present invention can be applied to, for example, a system which records a television broadcast and a radio broadcast provided with a built-in hard disk such as DVD (digital versatile disk) recorder with a hard disk, a hard disk recorder, a personal computer with a recording function.

Furthermore, the program for a flowchart shown in FIGS. 8 to 10 can be recorded on the information record medium such as a flexible disk, a hard disk, etc., or recorded after obtaining the program through a network such as Internet, etc., so that the program can be read by a general-purpose micro computer, etc. Thus, the micro computer can also function as the CPU 46 according to the present embodiment.

The inventionmaybe embodied in other specific forms without departing from the spirit thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An information providing apparatus, **characterized in that** said information providing apparatus provides recorded contents data using reference data having at least one of evaluation information about evaluation of contents data and management information for management of play-back and record of the contents data, comprising:
a recording device (35,39) which can record the contents data and attribute data indicating an attribute of the contents data;
a selection device (49) which selects plural pieces of the contents data;
an acquisition device (50) which obtains the reference data in the selected contents data; and
a play-back/providing device (46) which performs at least one of play-back control of the contents data or provision of evaluation information in the contents data based on presence/absence of record of contents data, the reference data, and the attribute data in the recording device.

2. The information providing apparatus according to claim 1, wherein
the play-back/providing device (46) comprises:
a determination device which determines presence/absence of record of contents data in the recording device based on attribute data recorded in the recording device; and
a control device which plays-back the contents data based on management information contained in the reference data when the determination device determines that the contents data is recorded in the recording device.

3. The information providing apparatus according to claim 1, wherein:
the play-back/providing device (46) further comprises a determination device which determines presence/absence of record of contents data in the recording device based on attribute data recorded in the recording device, and
when the determination device determines that the contents data is recorded in the recording device, evaluation information in the contents data together with the contents data is provided.

4. The information providing apparatus according to claim 1, wherein
the play-back/providing device (46) further comprises a determination device which determines presence/absence of record of contents data in the recording device based on attribute data recorded in the recording device, and
when the determination device determines that the contents data is not recorded in the recording device, only evaluation information in the selected contents data is provided.

5. The information providing apparatus according to claim 1, wherein
the reference data comprises evaluation/statistic information which includes PAFCount indicative of count of access of meta data of broadcast contents.

6. The information providing apparatus according to claim 1, wherein
the reference data comprises play-back control information which includes PlayListCount indicative of count of play-back of edited contents data.

7. The information providing apparatus according to claim 1, wherein
the reference data comprises user information which includes information of user who has edited or evaluated meta data of broadcast contents, said user information comprising an user's attribute including user's age or sex, and a user's attention is recognized based on the user's age or sex.

8. An information providing method, **characterized in that** said information providing method provides recorded contents data using reference data having at least one of evaluation information about evaluation of contents data and management information for management of play-back and record of the contents data, comprising:
a recording process which can record the contents data and attribute data indicating an attribute of the contents data;
a selection process which selects plural pieces of contents data;
an acquisition process which obtains the reference data in the selected contents data; and
a play-back/providing process which performs at least one of play-back control of the contents data andproviding evaluation information in the contents data based on presence/absence of record of contents data, the reference data, and the attribute data in the recording process.

9. An computer-recordable information record medium on which a program is recorded, **characterized in that** said programprovides recorded contents data using reference data having at least one of evaluation information about evaluation of contents data and management information for management of play-back and record of the contents data, wherein said program makes a computer function as:
a recording device (35,39) which can record the contents data and attribute data indicating an attribute of the contents data;
a selection device (49) which selects plural pieces of contents data;
an acquisition device (50) which obtains the reference data in the selected contents data; and
a play-back/providing device (46) which performs at least one of play-back control of the contents data and providing evaluation information in the contents data based on presence/absence of record of contents data, the reference data, and the attribute data in the recording device.
